# EUROPÄISCHE PATENTANMELDUNG

(11) **EP 4 817 497 A1**
(43) Veröffentlichungstag der Anmeldung: **07.10.2026**
(21) Anmeldenummer: 26163892.8
(22) Anmeldetag: 11.03.2026
(51) Int. Cl.: A47L 11/40

(54) **VORRICHTUNG UND VERFAHREN ZUR STEUERUNG EINES REINIGUNGSROBOTERS**

(30) Priorität: 03.04.2025 DE 102025113163
(71) Anmelder: BSH Hausgeräte GmbH, 81739 München (DE)
(72) Erfinder: Daniel, Kristina, 97616 Bad Neustadt (DE); Schnitzer, Frank, 97616 Bad Neustadt (DE); Schreiner, Dominik, 36148 Kalbach (DE)

(57) **Zusammenfassung**

Es wird eine Vorrichtung (430) zur Steuerung eines Reinigungsroboters (100) beschrieben, der ausgebildet ist, in einer Servicestation (200) angeordnet zu werden, wobei die Servicestation (200) eine Zugangsöffnung (214) aufweist, die dafür vorgesehen ist, dass der Reinigungsroboter (100) über die Zugangsöffnung (214) zu der Servicestation (200) hin- oder von der Servicestation (200) wegfährt. Die Vorrichtung (430) ist eingerichtet, anhand von ein oder mehreren Sensoren (402) Sensordaten in Bezug auf eine Annäherung eines Körperteils eines Nutzers an die Zugangsöffnung (214) und/oder in Bezug auf eine Krafteinwirkung auf ein an der Zugangsöffnung (214) angeordnetes Tor (300) zu ermitteln. Die Vorrichtung (430) ist ferner eingerichtet, den Reinigungsroboter (100) in Abhängigkeit von den Sensordaten zu betreiben.

## Beschreibung

Die Erfindung betrifft eine Vorrichtung und ein entsprechendes Verfahren zur Steuerung eines Reinigungsroboters, insbesondere eines in einer Servicestation angeordneten Reinigungsroboters.

Ein Reinigungsroboter kann dazu genutzt werden, autonom eine Oberfläche, insbesondere den Boden in einem Haushalt, zu reinigen. Der Reinigungsroboter kann zwischen Betriebsphasen in oder an einer Servicestation angeordnet werden, an der ein oder mehrere Servicefunktionen zur Regenerierung des Reinigungsroboters bewirkt werden können. Beispielhafte Servicefunktionen sind: das Laden des elektrischen Energiespeichers des Reinigungsroboters, und/oder das Entleeren, insbesondere das Absaugen, des Sammelbehälters des Reinigungsroboters, und/oder das Reinigen von ein oder mehreren Wischelementen des Reinigungsroboters.

Die Servicestation für einen Reinigungsroboter kann aus Platzgründen an einem Ort, z. B. in dem Sockelbereich eines Küchenschranks, angeordnet sein, der für einen Nutzer des Reinigungsroboters relativ schwer zugänglich ist. Das vorliegende Dokument befasst sich mit der technischen Aufgabe, auch in einem derartigen Fall eine komfortable und zuverlässige Steuerung eines Reinigungsroboters zu ermöglichen.

Die Aufgabe wird jeweils durch den Gegenstand der einzelnen unabhängigen Patentansprüche gelöst. Vorteilhafte Ausführungsformen sind insbesondere in den abhängigen Patentansprüchen definiert, in nachfolgender Beschreibung beschrieben oder in der beigefügten Zeichnung dargestellt.

Gemäß einem Aspekt wird eine Vorrichtung zur Steuerung eines Reinigungsroboters beschrieben, wobei der Reinigungsroboter ausgebildet ist, in einer Servicestation angeordnet zu werden. Der Reinigungsroboter kann ausgebildet sein, ein oder mehrere (ggf. vordefinierte) Reinigungsaufträge auszuführen. Ein Reinigungsauftrag kann dabei jeweils angeben und/oder definieren,
- den räumlichen Bereich (z. B. ein oder mehrere Zimmer eines Haushalts), der durch den Reinigungsroboter zu reinigen ist;
- den Typ der Reinigung, insbesondere eine Trockenreinigung und/oder eine Nassreinigung, die durch den Reinigungsroboter durchzuführen ist; und/oder
- die Intensität, insbesondere die Gebläseleistungsstufe und/oder die Rotationsund/oder Vibrationsgeschwindigkeit eines Wischelements und/oder die Flüssigkeitsmenge, mit der die Reinigung durch den Reinigungsroboter durchzuführen ist.

Unterschiedliche Reinigungsaufträge können sich in Bezug auf ein oder mehrere der o. g. Parameter unterscheiden.

Die Servicestation des Reinigungsroboters weist eine Zugangsöffnung auf, die dafür vorgesehen ist, dass der Reinigungsroboter über die Zugangsöffnung zu der Servicestation, insbesondere zu der Abstellfläche und/oder zu dem Andockelement der Servicestation, hin- oder von der Servicestation, insbesondere von der Abstellfläche und/oder von dem Andockelement der Servicestation, wegfährt. Die Servicestation kann ein Tor aufweisen, das (anhand eines elektrisch betriebenen Aktors, etwa eines Elektromotors) geöffnet bzw. geschlossen werden kann. Das Tor kann ausgebildet sein, die Zugangsöffnung zu öffnen bzw. freizugeben oder zu schließen bzw. zu blockieren.

Die Servicestation kann ausgebildet sein, in dem Sockelbereich zwischen zwei Sockeln eines (Küchen-) Schranks angeordnet zu werden, insbesondere derart, dass
- die Zugangsöffnung zwischen den zwei Sockeln des Schranks angeordnet ist und/oder durch die zwei Sockel des Schranks begrenzt wird; und/oder
- die Zugangsöffnung einer Öffnung in der Sockelleiste des Schranks entspricht, die ggf. durch das Tor der Servicestation verschlossen oder geöffnet werden kann.

Die Vorrichtung ist eingerichtet, anhand von ein oder mehreren Sensoren (der Servicestation) Sensordaten in Bezug auf eine Annäherung eines Körperteils (z. B. eines Fußes) eines Nutzers an die Zugangsöffnung und/oder in Bezug auf eine Krafteinwirkung auf das an der Zugangsöffnung angeordnete (geschlossene) Tor (z. B. durch den Fuß des Nutzers) zu ermitteln.

Die ein oder mehreren Sensoren können zumindest einen Sensor umfassen, der eingerichtet ist, Sensordaten in Bezug auf eine Krafteinwirkung auf das Tor der Servicestation zu erfassen. Beispielhafte Sensoren sind zumindest ein an dem Tor angeordneter Dehnungsmessstreifen, und/oder zumindest ein an dem Tor angeordneter Beschleunigungs- und/oder Kraftsensor und/oder zumindest ein Schalter.

Wie bereits dargelegt, kann das Tor einen elektrisch betriebenen Aktor, etwa einen Elektromotor, umfassen, der eingerichtet ist, das Tor zu öffnen oder zu schließen. Die ein oder mehreren Sensoren können zumindest einen Sensor umfassen, der eingerichtet ist, den Strom und/oder die Spannung zu erfassen, die durch die Krafteinwirkung auf das Tor in dem Aktor induziert werden bzw. wurden.

Alternativ oder ergänzend können die ein oder mehreren Sensoren zumindest einen Sensor umfassen, der eingerichtet ist, Sensordaten in Bezug auf eine Annäherung an die Zugangsöffnung der Servicestation zu erfassen. Beispielhafte Sensoren sind ein kapazitiver Sensor, der insbesondere an dem Tor der Servicestation angeordnet ist, und/oder eine an der Zugangsöffnung angeordnete Lichtschranke, und/oder ein an der Zugangsöffnung angeordneter Ultraschallsensor.

Die Vorrichtung ist ferner eingerichtet, den Reinigungsroboter in Abhängigkeit von den Sensordaten zu betreiben. Die Vorrichtung kann insbesondere eingerichtet sein, auf Basis der Sensordaten ein Steuersignal zur Ansteuerung des Reinigungsroboters zu ermitteln. Der Reinigungsroboter kann dann in zuverlässiger und effizienter Weise anhand des Steuersignals veranlasst werden, eine mit dem Steuersignal assoziierte Funktion, insbesondere einen bestimmten Reinigungsauftrag, auszuführen.

Es wird somit eine Vorrichtung (für eine Servicestation) beschrieben, die es einem Nutzer ermöglicht, einen Reinigungsroboter in komfortabler und zuverlässiger Weise anhand einer Annäherung und/oder anhand einer Krafteinwirkung an der Zugangsöffnung der Servicestation des Reinigungsroboters zu steuern.

Die Vorrichtung kann eingerichtet sein, das Steuersignal über eine drahtgebundene oder drahtlose Kommunikationsverbindung an den Reinigungsroboter zu senden, um den Reinigungsroboter zu veranlassen, die mit dem Steuersignal assoziierte Funktion, insbesondere den damit assoziierten Reinigungsauftrag, auszuführen. Das Steuersignal kann z. B. in effizienter und zuverlässiger Weise über das Andockelement der Servicestation an den Reinigungsroboter gesendet werden.

Die Vorrichtung kann eingerichtet sein, auf Basis der Sensordaten ein Muster der Annäherung und/oder der Krafteinwirkung zu erkennen. Ein Muster kann z. B. definiert sein, durch
- eine bestimmte Anzahl von zeitlich isolierten Annäherungen und/oder Krafteinwirkungen;
- die Dauer einer zeitlich isolierten Annäherung und/oder Krafteinwirkung; und/oder
- den zeitlichen Abstand zwischen zwei zeitlich isolierten Annäherungen und/oder Krafteinwirkungen.

Das Steuersignal zum Bewirken der Funktion des Reinigungsroboters kann dann in besonders zuverlässiger Weise auf Basis des erkannten Musters ermittelt werden.

Die Vorrichtung kann eingerichtet sein, auf Basis der Sensordaten ein bestimmtes Muster der Annäherung und/oder der Krafteinwirkung aus einer Vielzahl von unterschiedlichen Mustern der Annäherung und/oder der Krafteinwirkung zu erkennen. Dabei kann die Vielzahl von unterschiedlichen Mustern über eine vordefinierte Zuordnungsfunktion, insbesondere über eine vordefinierte Tabelle, mit einer entsprechenden Vielzahl von unterschiedlichen Steuersignalen für eine entsprechende Vielzahl von unterschiedlichen Funktionen (z. B. mit einer Vielzahl von unterschiedlichen Reinigungsaufträgen) des Reinigungsroboters assoziiert sein. Die einzelnen Muster der Vielzahl von unterschiedlichen Mustern können sich unterscheiden, in Bezug auf:
- die Anzahl von zeitlich isolierten Annäherungen und/oder Krafteinwirkungen;
- die Dauer einer zeitlich isolierten Annäherung und/oder Krafteinwirkung; und/oder
- den zeitlichen Abstand zwischen zwei zeitlich isolierten Annäherungen und/oder Krafteinwirkungen.

Die Zuordnungsfunktion kann auf einer Speichereinheit der Servicestation und/oder des Reinigungsroboters gespeichert sein. Das Steuersignal für das bestimmte Muster kann in besonders zuverlässiger Weise anhand der Zuordnungsfunktion ermittelt werden. Durch die Erkennung von unterschiedlichen Mustern für unterschiedliche Funktionen kann ein besonders komfortabler Betrieb des Reinigungsroboters ermöglicht werden.

Die Vorrichtung kann eingerichtet sein, über eine Benutzerschnittstelle (des Reinigungsroboters) eine Nutzereingabe in Bezug auf die Funktion und/oder einen Umfang der Funktion des Reinigungsroboters zu ermitteln, die mit einem bestimmten Steuersignal und/oder mit einem bestimmten Muster der Annäherung und/oder Krafteinwirkung assoziiert ist. Die Zuordnungsfunktion, insbesondere die Tabelle, zur Zuordnung des bestimmten Steuersignals und/oder des bestimmten Musters der Annäherung und/oder der Krafteinwirkung mit einer Funktion des Reinigungsroboters kann dann in Abhängigkeit von der Nutzereingabe angepasst und/oder aktualisiert werden. Es kann somit einem Nutzer ermöglicht werden, ein oder mehrere Funktionen, insbesondere Reinigungsaufträge, festzulegen, die durch entsprechende ein oder mehrere unterschiedliche Muster der Annäherung und/oder Krafteinwirkung ausgelöst werden können. So kann der Komfort der Steuerung des Reinigungsroboters weiter erhöht werden.

Wie bereits dargelegt, kann die Servicestation ein Andockelement zum Andocken des Reinigungsroboters umfassen. Die Vorrichtung kann eingerichtet sein, zu bestimmen, ob der Reinigungsroboter an dem Andockelement angedockt ist oder nicht. Die Vorrichtung kann ferner eingerichtet sein, den Reinigungsroboter in Abhängigkeit von den Sensordaten zu betreiben, insbesondere nur dann, wenn bestimmt wird, dass der Reinigungsroboter an dem Andockelement angedockt ist. Die Vorrichtung kann insbesondere eingerichtet sein, das Steuersignal (zum Auslösen der Funktion) an den Reinigungsroboter zu senden, insbesondere nur dann, wenn bestimmt wird, dass der Reinigungsroboter an dem Andockelement angedockt ist. So kann eine besonders effiziente und zuverlässige Steuerung des Reinigungsroboters bewirkt werden.

Gemäß einem weiteren Aspekt wird eine Servicestation für einen Reinigungsroboter beschrieben, wobei die Servicestation eine Abstellfläche für den Reinigungsroboter, sowie eine Zugangsöffnung umfasst, die dafür vorgesehen ist, dass der Reinigungsroboter über die Zugangsöffnung zu der Abstellfläche hin- oder von der Abstellfläche wegfährt. Des Weiteren umfasst die Servicestation eine Vorrichtung zur Steuerung des Reinigungsroboters, die wie in diesem Dokument beschrieben ausgebildet ist.

Gemäß einem weiteren Aspekt wird ein Reinigungsroboter beschrieben, der die in diesem Dokument beschriebene Vorrichtung umfasst.

Gemäß einem weiteren Aspekt wird ein System beschrieben, das die in diesem Dokument beschriebene Servicestation umfasst. Das System kann ferner einen Reinigungsroboter und/oder einen (Küchen-) Schrank umfassen.

Gemäß einem weiteren Aspekt wird ein Verfahren zur Steuerung eines Reinigungsroboters beschrieben, der ausgebildet ist, in oder an einer Servicestation angeordnet zu werden, wobei die Servicestation eine Zugangsöffnung aufweist, die dafür vorgesehen ist, dass der Reinigungsroboter über die Zugangsöffnung zu der Servicestation hin- oder von der Servicestation wegfährt. Das Verfahren umfasst das Ermitteln, anhand von ein oder mehreren Sensoren, von Sensordaten in Bezug auf eine Annäherung eines Körperteils eines Nutzers an die Zugangsöffnung und/oder in Bezug auf eine Krafteinwirkung auf ein an der Zugangsöffnung angeordnetes Tor. Des Weiteren umfasst das Verfahren das Betreiben des Reinigungsroboters in Abhängigkeit von den Sensordaten.

Es ist zu beachten, dass jegliche Aspekte der in diesem Dokument beschriebenen Vorrichtung und/oder des in diesem Dokument beschriebenen Verfahrens in vielfältiger und/oder beliebigerweise miteinander kombiniert werden können. Insbesondere können die Merkmale der Patentansprüche in vielfältiger und/oder beliebigerweise miteinander kombiniert werden.

Im Weiteren wird die Erfindung anhand von in der beigefügten Zeichnung dargestellten Ausführungsbeispielen näher beschrieben. Dabei zeigen:
- Figuren 1a und 1b: einen beispielhaften Reinigungsroboter in unterschiedlichen perspektivischen Ansichten;
- Figur 1c: beispielhafte Komponenten eines Reinigungsroboters;
- Figuren 2a bis 2e: unterschiedliche Ansichten einer im Sockelbereich eines Küchenschanks angeordneten Servicestation;
- Figuren 3a bis 3e: unterschiedliche Ansichten einer Servicestation mit einem Tor;
- Figur 4: ein Blockdiagramm eines Systems zur Steuerung eines Reinigungsroboters; und
- Figur 5: ein Ablaufdiagramm eines beispielhaften Verfahrens zur Steuerung eines Reinigungsroboters.

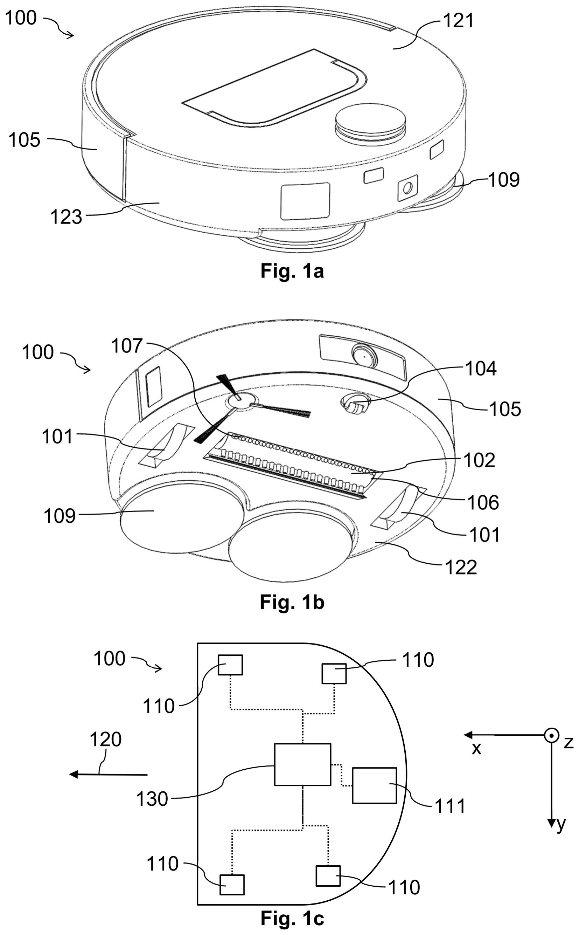

Wie eingangs dargelegt, befasst sich das vorliegende Dokument damit, eine komfortable und zuverlässige Steuerung eines Reinigungsroboters zu ermöglichen, insbesondere dann, wenn der Reinigungsroboter in einer (schwer zugänglichen) Servicestation angeordnet ist. In diesem Zusammenhang zeigen Fig. 1a die Oberseite 121 und Fig. 1b die Unterseite 122 eines Reinigungsroboters 100, insbesondere eines Saugroboters.

Die Unterseite 122 ist im Saugbetrieb des Reinigungsroboters 100 dem zu reinigenden Boden bzw. der zu reinigenden Fläche eines Reinigungsbereichs, etwa eines Raumes in einem Haushalt, zugewandt. Die Unterseite 122 des Reinigungsroboters 100 weist typischerweise ein oder mehrere Antriebseinheiten 101 (mit ein oder mehreren Antriebsrädern) auf, durch die der Reinigungsroboter 100 selbständig bewegt werden kann, um unterschiedliche Bereiche eines Bodens zu reinigen. Des Weiteren kann der Reinigungsroboter 100 ein oder mehrere Führungs- und/oder Stützelemente 104 (z. B. nicht angetriebene Räder) aufweisen, die eine stabile Bewegung des Reinigungsroboters 100 über den zu reinigenden Boden ermöglichen. Außerdem umfasst ein Reinigungsroboter 100 typischerweise ein oder mehrere Reinigungseinheiten 106 (insbesondere Saugdüsen), die jeweils eingerichtet sind, den Boden unter dem Reinigungsroboter 100 zu reinigen.

Eine Reinigungseinheit 106 (insbesondere eine Saugdüse) kann eine Bürstenwalze 102 aufweisen, die ausgebildet ist, sich um eine Rotationsachse zu drehen, wobei die Rotationsachse typischerweise parallel zu der Unterseite 122 des Reinigungsroboters 100 angeordnet ist. Die Bürstenwalze 102 kann dazu verwendet werden, Staub und/oder Verunreinigungen auf dem zu reinigenden Boden mechanisch von dem Boden zu lösen, sodass der Staub und/oder die Verunreinigungen mit erhöhter Zuverlässigkeit in den Saugmund 107 der Reinigungseinheit 106 gesogen werden können.

An der Unterseite 122 des Reinigungsroboters 100 können ferner ein oder mehrere Wischelemente 109, insbesondere Wischpads, angeordnet sein, die jeweils eingerichtet sind, den zu reinigenden Boden zu wischen. Der Reinigungsroboter 100 kann eine Wasserversorgungseinheit (nicht dargestellt) aufweisen, die ausgebildet ist, die ein oder mehreren Wischelemente 109 jeweils mit Wischwasser zu versorgen.

An der Oberseite 121 des Reinigungsroboters 100 kann eine Benutzerschnittstelle angeordnet sein, die es einem Nutzer des Reinigungsroboters 100 ermöglicht, Steuereingaben zu tätigen. Außerdem kann der Reinigungsroboter 100 an einer Seitenwand 123 (z. B. an einer Seitenwand 123 im Frontbereich des Reinigungsroboters 100) einen Stoßfänger 105 umfassen, wobei an dem Stoßfänger 105 ein Stoßsensor angeordnet sein kann, der eingerichtet ist, Sensordaten zu erfassen, die anzeigen, ob der Reinigungsroboter 100 in Bewegungsrichtung 120 (siehe Fig. 1c) gegen ein Hindernis gestoßen ist oder nicht. Das Auslösen des Stoßsensors durch ein Hindernis (aufgrund der Auslenkung des Stoßfängers 105) kann z. B. bewirken, dass sich der Reinigungsroboter 100 um seine, senkrecht auf dem Boden stehende, Vertikal- bzw. Hochachse dreht, und dadurch die Bewegungsrichtung 120 ändert, um dem Hindernis auszuweichen.

Des Weiteren weist ein Reinigungsroboter 100 typischerweise ein oder mehrere Umfeldsensoren 110 auf (siehe Fig. 1c), die jeweils eingerichtet sind, Umfeld- bzw. Sensordaten in Bezug auf das Umfeld des Reinigungsroboters 100 zu erfassen. Die ein oder mehreren Umfeldsensoren 110 können umfassen: eine oder mehrere Bildkameras, ein oder mehrere Ultraschallsensoren, ein oder mehrere taktile und/oder optische Abstandssensoren, ein oder mehrere akustische Sensoren, ein oder mehrere Temperatursensoren, ein oder mehrere Lidar- und/oder Radarsensoren, etc. Eine Steuereinheit 130 des Reinigungsroboters 100 kann eingerichtet sein, auf Basis der Umfelddaten digitale Karteninformation in Bezug auf den zu reinigenden Reinigungsbereich zu ermitteln und ggf. auf einer Speichereinheit 111 des Reinigungsroboters 100 zu speichern. Der Reinigungsroboter 100 kann die digitale Karteninformation nutzen, um sich innerhalb des Reinigungsbereichs (z. B. innerhalb eines Raums) selbstständig zu orientieren und/oder um eine Fahrroute zur Reinigung des Reinigungsbereichs festzulegen.

Fig. 1c zeigt ein kartesisches Koordinatensystem mit einer Längsachse (d. h. mit einer x-Achse), mit einer Querachse (d. h. mit einer y-Achse) und mit einer Hoch- bzw. Höhenachse (d. h. mit einer z-Achse). Die Bewegungsrichtung 120 des Reinigungsroboters 100 entspricht typischerweise der Längsachse. Die Rotationsachse der Bürstenwalze 102 verläuft typischerweise entlang der Querachse.

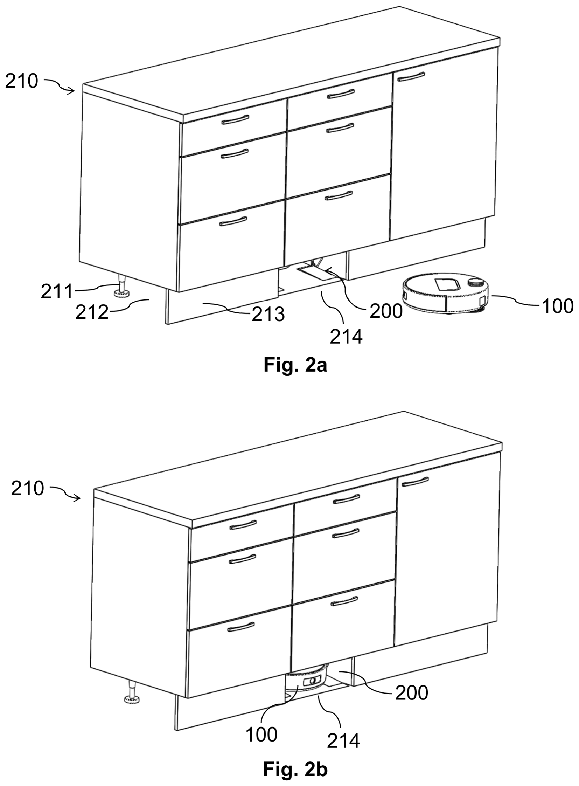

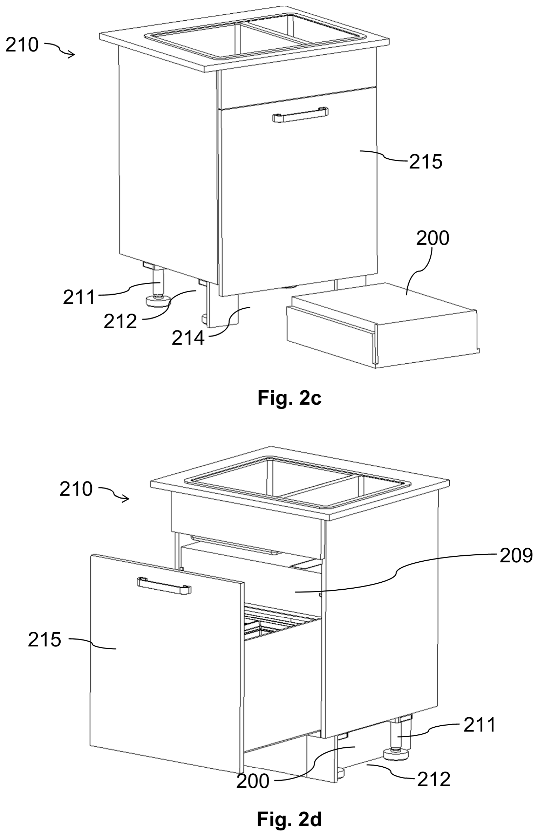

Figuren 2a bis 2d zeigen unterschiedliche Ansichten eines Küchenschranks 210 (einer Einbauküche). Der Küchenschrank 210 steht auf mehreren Sockeln 211, wobei typischerweise die Höhe der einzelnen Sockel 211 eingestellt werden kann, sodass der Küchenschrank 210 auch auf einem unebenen Boden waagerecht ausgerichtet werden kann. Die einzelnen Sockel 211 weisen (zumindest im Mittel) eine bestimmte Sockelhöhe auf, die typischerweise im Bereich zwischen 5 cm und 15 cm liegt. Ein Küchenschrank 210 weist typischerweise vier Sockel 211 auf, die jeweils in unterschiedlichen Ecken eines Rechteckes angeordnet sind. Ferner weist ein Küchenschrank 210 an der Front typischerweise zumindest eine Tür 215 auf, die oberhalb der Sockel 211 des Küchenschranks 210 angeordnet ist.

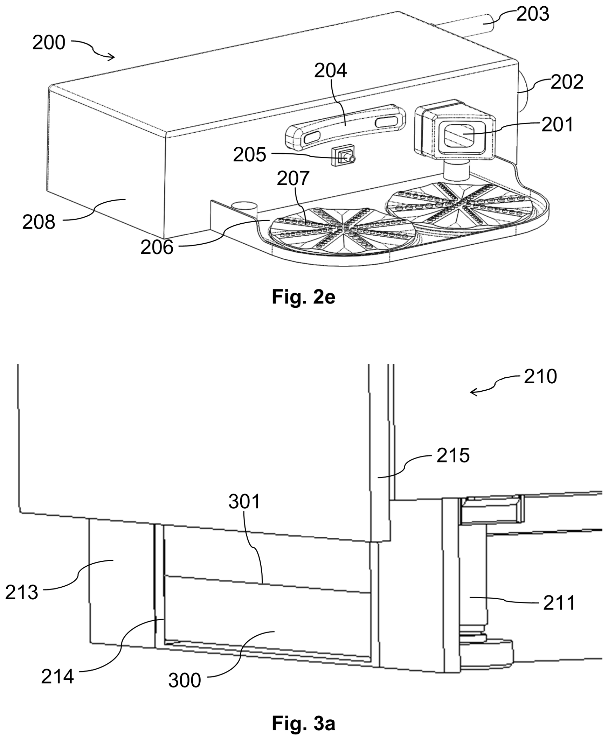

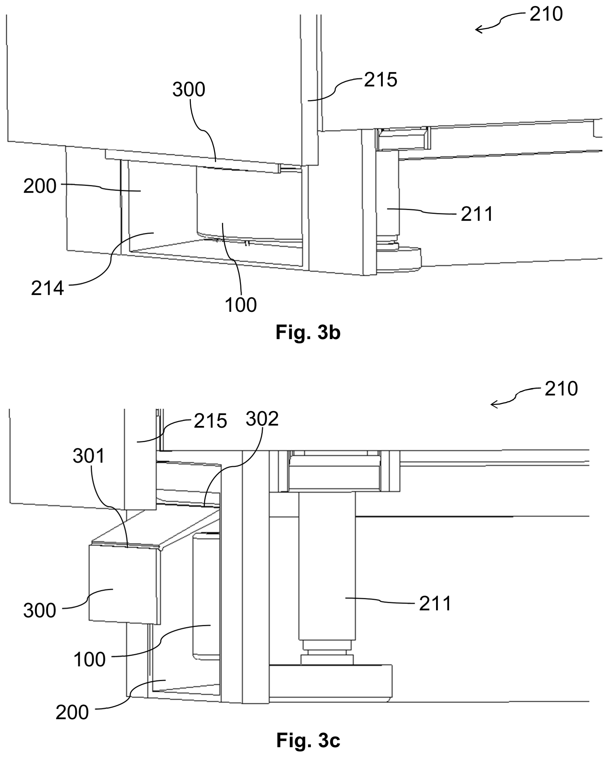

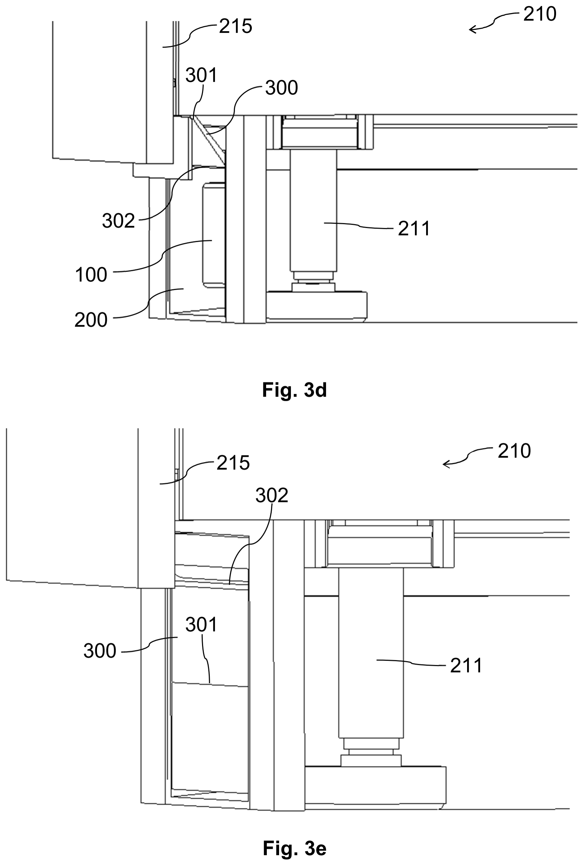

Durch die Sockel 211, die an der Unterseite des Küchenschranks 210 angeordnet sind, wird somit ein Freiraum gebildet, der senkrecht zu dem Boden, auf dem der Küchenschrank 210 steht, eine der Sockelhöhe entsprechende Höhe aufweist. Dieser Freiraum kann als Sockelbereich 212 bezeichnet werden. Der Sockelbereich 212 kann dazu verwendet werden, eine Servicestation 200 für einen Reinigungsroboter 100 anzuordnen. Zu diesem Zweck kann die Frontblende 213 zur Abdeckung der Front des Sockelbereichs 212 eine Öffnung 214 aufweisen, sodass die Servicestation 200 durch die Öffnung 214 der Frontblende 213 in den Sockelbereich 212 unter dem Küchenschrank 210 angeordnet werden kann. Die Servicestation 200 kann an der der Öffnung 214 zugewandten Frontseite offen sein, sodass der Reinigungsroboter 100 durch die Öffnung 214 an der in dem Sockelbereich 212 angeordneten Servicestation 200 angeordnet werden kann. In einem alternativen Beispiel weist die Servicestation 200 ein Tor zur Abdeckung der Öffnung 214 auf, wie beispielhaft in den Figuren 3a bis 3e dargestellt.

Der Sockelbereich 212 weist entlang der Querachse (d. h. entlang der Breite des Reinigungsroboters 100, wenn dieser in die Servicestation 200 einfährt oder aus dieser herausfährt) eine bestimmte Öffnungsbreite zwischen zwei direkt benachbarten Sockeln 211 auf. Der zwischen zwei direkt benachbarten Sockeln 211 angeordnete Teilbereich des Sockelbereichs 212 kann als Basisbereich bezeichnet werden. Die Öffnung 214 in der Frontblende 213 kann die Öffnungsbreite aufweisen. Ferner kann die Servicestation 200 entlang der Querachse im Wesentlichen die Öffnungsbreite aufweisen, sodass die Servicestation 200 in zuverlässiger Weise durch die Öffnung 214 in den Sockelbereich 212 zwischen zwei direkt benachbarten Sockeln 211 eingeschoben werden kann (wie beispielhaft in Fig. 2c dargestellt).

Die Servicestation 200 kann neben dem in dem Sockelbereich 212 angeordneten Basismodul zumindest ein weiteres Zusatzmodul 209 aufweisen, das z. B. in einem weiteren Teilbereich des Küchenschranks 210 angeordnet ist, wobei der Teilbereich hinter der Tür 215 des Küchenschranks 210 angeordnet sein kann. In dem Zusatzmodul 209 können ein oder mehrere Komponenten der Servicestation 200 angeordnet sein, wie z. B. der Sammelbehälter zur Aufnahme der aus dem Sammelbehälter des Reinigungsroboters 100 abgesaugten Schmutzpartikel.

Das in dem Sockelbereich 212 angeordnete Basismodul der Servicestation 200 kann eine Abstellfläche für den Reinigungsroboter 100 aufweisen. Des Weiteren kann das Basismodul der Servicestation 200 ein Andockelement 208 aufweisen, an das der Reinigungsroboter 100 angedockt ist, wenn der Reinigungsroboter 100 auf der Abstellfläche der Servicestation 200 angeordnet ist (siehe Fig. 2e). Das Andockelement 208 kann umfassen:
- eine elektrische Versorgungschnittstelle 204 zur elektrischen Energieversorgung, insbesondere zum Laden des elektrischen Energiespeichers, des Reinigungsroboters 100;
- eine Datenschnittstelle zur Bereitstellung einer Kommunikationsverbindung zwischen der Servicestation 200 und dem Reinigungsroboter 100 (wobei die Datenschnittstelle z. B. als Teil der elektrischen Schnittstelle implementiert sein kann);
- einen Absaugkanal 201 zum Absaugen des Sammelbehälters des Reinigungsroboters 100; und/oder
- einen Flüssigkeitskanal 205 (insbesondere einen Tankstutzen) zur Bereitstellung von Reinigungsflüssigkeit, insbesondere von Wischwasser, für die Nassreinigungsfunktion des Reinigungsroboters 100.

Die Abstellfläche (des Basismoduls) der Servicestation 200 kann ausgebildet sein, eine Reinigung der ein oder mehreren Wischelemente 109 des Reinigungsroboters 100 zu bewirken. Zu diesem Zweck kann an der Abstellfläche eine Wanne 206 angeordnet sein, in der die ein oder mehreren Wischelemente 109 platziert werden können, um die ein oder mehreren Wischelemente 109 zu reinigen.

Fig. 2e zeigt eine beispielhafte Servicestation 200, insbesondere ein beispielhaftes Basismoduls einer Servicestation 200. Die Servicestation 200 weist eine elektrische Versorgungsschnittstelle 204 auf, die ausgebildet ist, eine komplementäre Ladeschnittstelle des Reinigungsroboters 100 elektrisch leitend zu kontaktieren, wenn der Reinigungsroboter 100 an der Servicestation 200 angedockt ist. Der elektrische Energiespeicher des Reinigungsroboters 100 kann dann über die Versorgungsschnittstelle 204 geladen werden. Ferner kann die Servicestation 200 einen Andocksensor aufweisen, der ausgebildet ist, zu erkennen, ob der Reinigungsroboter 100 an der Basiseinheit 200 angedockt ist oder nicht. Weiterhin kann die Servicestation 200 einen Tankstutzen 205 aufweisen, der ausgebildet ist, sich fluidleitend mit einer komplementären Tankschnittstelle an dem Reinigungsroboter 100 zu verbinden, wenn der Reinigungsroboter 100 an der Servicestation 200 angedockt ist. Der Flüssigkeitstank des Reinigungsroboters 100, aus dem die ein oder mehreren Wischelemente 109 jeweils mit Wischwasser versorgt werden, kann dann über den Tankstutzen 205 mit Frischwasser gespeist werden.

Des Weiteren kann die Servicestation 200, z. B. an der Abstellfläche für den Reinigungsroboter 100, eine Regenerierungswanne 206 aufweisen, die ausgebildet ist, die ein oder mehreren Wischelemente 109 (insbesondere Wischpads) des Reinigungsroboters 100 zu regenerieren, insbesondere zu reinigen, wenn der Reinigungsroboter 100 an der Servicestation 200 angedockt ist. Die Regenerierungswanne 206 erstreckt sich ausgehend von dem Andockelement 208 der Servicestation 200 zu dem angedockten Reinigungsroboter 100 hin, sodass die ein oder mehreren Wischelemente 109 des Reinigungsroboters 100 über der Regenerierungswanne 206 angeordnet sind, wenn der Reinigungsroboter 100 an der Servicestation 200, insbesondere an dem Andockelement 208 der Servicestation 200, angedockt ist. In der Regenerierungswanne 206 kann für die einzelnen Wischelemente 109 des Reinigungsroboters 100 jeweils ein Regenerierungselement 207 angeordnet sein, das jeweils ausgebildet ist, das entsprechende Wischelement 109 zu regenerieren, insbesondere zu reinigen.

In Fig. 2e ist ferner ein Verbindungskanal 202 zu sehen, über den das Andockelement 208 mit dem Zusatzmodul 209 verbunden ist, z. B. um die aus dem Sammelbehälter des Reinigungsroboters 100 abgesaugten Schmutzpartikel zu dem Sammelbehälter des Zusatzmoduls 209 zu leiten. Des Weiteren kann die Servicestation 200 ein oder mehrere Leitungskanäle 203 aufweisen, über die die Servicestation 200 fluidleitend mit einem Wasseranschluss, insbesondere mit einem Festwasseranschluss eines Versorgungsnetzes, verbunden werden kann. Ergänzend können ein oder mehrere weitere Leitungskanäle bereitgestellt werden, um die Servicestation 200 fluidleitend mit einem Wasserabfluss zu verbinden, so dass Schmutzwasser von der Servicestation 200, insbesondere ohne Zutun eines Nutzers, abgeleitet werden kann.

Wie beispielhaft in den Figuren 3a bis 3e dargestellt, kann die Servicestation 200 ein Tor 300 aufweisen, das ausgebildet ist, die (Zugangs-) Öffnung 214 in der Sockelleiste 213 selektiv zu öffnen (sodass der Reinigungsroboter 100 zu der Abstellfläche der Servicestation 200 hin- oder von der Abstellfläche der Servicestation 200 wegfahren kann) oder zu schließen (wenn der Reinigungsroboter 100 an der Abstellfläche der Servicestation 200 angeordnet ist, oder wenn der Reinigungsroboter 100 einen Reinigungsauftrag ausführt). Das Tor 300 kann z. B. ausgebildet sein, um eine Drehachse 302 geschwenkt zu werden, um das Tor 300 zu öffnen oder zu schließen. Die Drehachse 302 kann im Wesentlichen parallel zu dem Boden verlaufen, auf dem die Servicestation 200 steht. Die Drehachse 302 kann insbesondere parallel zu der Querachse verlaufen. Ferner kann die Drehachse 302 an der oberen Kante der Öffnung 214 der Sockelleiste 213 angeordnet sein.

Das Tor 300 kann durch einen Aktor (z. B. durch einen Elektromotor) geöffnet bzw. geschlossen werden. Es kann insbesondere durch den Aktor bewirkt werden, dass das Tor 300 um die Drehachse 302 gedreht wird, um das Tor 300 zu öffnen bzw. anzuheben oder zu schließen bzw. abzusenken.

In dem in den Figuren 3a bis 3e dargestellten Beispiel weist das Tor 300 eine Faltkante 301 auf, die parallel zu der Drehachse 302 des Tors 300 verläuft und durch die das Tor 300 in einen ersten (oberen) Teilbereich und in einen zweiten (unteren) Teilbereich aufteilt wird. Durch eine Drehung des Tors 300 um die Drehachse 302 kann der erste Teilbereich um die Drehachse 302 geschwenkt werden, sodass die Faltkante 301 und der daran befestigte zweite Teilbereich angehoben werden. Der zweite Teilbereich weist dabei weiterhin eine senkrecht zu dem Boden verlaufende Ausrichtung auf (wie aus Fig. 3c zu entnehmen ist). Durch eine derartige Aufteilung des Tors 300 in mehrere Teilbereiche kann das Tor 300 in kompakter Weise hinter der Tür 215 des Küchenschranks 210 angeordnet werden, wenn das Tor 300 in dem geöffneten Zustand ist (wie in Fig. 3d gezeigt).

Das Tor 300 der Servicestation 200 wird typischerweise geschlossen (d. h. in den geschlossenen Zustand überführt), wenn der Reinigungsroboter 100 an der Servicestation 200 angedockt ist. So kann eine Verschmutzung des Sockelbereichs 212 des Küchenschranks 210 vermieden werden. Ferner kann so ein angenehmes Erscheinungsbild innerhalb einer Küche bewirkt werden. Andererseits wird durch die Anordnung des Reinigungsroboters 100 in dem Sockelbereich 212 des Küchenschranks, und insbesondere durch das Verdecken der Öffnung 214 der Sockelleiste 213 durch das Tor 300 der Servicestation 200, der Zugang zu der Benutzerschnittstelle des Reinigungsroboters 100 blockiert, wodurch die Nutzerinteraktion mit dem Reinigungsroboter 100 erschwert und/oder behindert wird, insbesondere dann, wenn der Nutzer den Reinigungsroboter 100 (z. B. aufgrund von nassen Händen) nicht über die Software-App auf einem Smartphone oder Tablet-PC steuern kann.

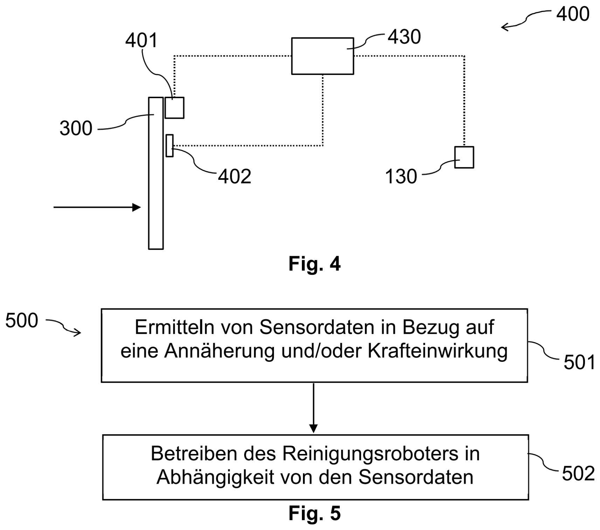

Fig. 4 zeigt ein beispielhaftes System 400, das eine komfortable und zuverlässige Nutzerinteraktion mit einem Reinigungsroboter 100 ermöglicht, der an einer Servicestation 200 mit einem Tor 300 angeordnet ist. Das System 400 umfasst eine (Steuer-) Vorrichtung 430, die eingerichtet ist, Sensordaten in Bezug auf eine äußere Kraft zu erfassen, die auf das Tor 300 einwirkt. Die auf das Tor 300 einwirkende äußere Kraft ist in Fig. 4 durch einen Pfeil dargestellt. Die äußere Kraft kann durch einen Nutzer bewirkt werden. Wenn die Servicestation 200 in dem Sockelbereich 212 eines Küchenschranks 210 angeordnet ist, kann der Nutzer die äußere Kraft z. B. mit dem Fuß bewirken, indem der Nutzer einmal oder mehrmals gegen das Tor 300 tritt und/oder indem der Nutzer mit dem Fuß einen Druck auf das Tor 300 ausübt. Dabei kann von dem Nutzer ein bestimmtes zeitliches Muster der äußeren Kraft bewirkt werden. Ein zeitliches Muster der äußeren Kraft kann z. B. eine bestimmte Anzahl von Kraftimpulsen aufweisen, wobei die einzelnen Kraftimpulse einen bestimmten zeitlichen Abstand zueinander aufweisen können.

Die Sensordaten in Bezug auf die äußere Kraft können z. B. auf Basis des Aktors 401 des Tors 300 erfasst werden. Durch die auf das Tor 300 einwirkende Kraft kann eine Bewegung des Tors 300, insbesondere eine (leichte) Rotation des Tors 300 um die Drehachse 302, bewirkt werden. Durch diese Bewegung des Tors 300 können eine Spannung und/oder ein Strom in dem Aktor 401 des Tors 300 induziert werden, wobei die Spannung und/oder der Strom durch eine Messeinheit (nicht dargestellt) erfasst werden können, um die Sensordaten in Bezug auf die äußere Kraft bereitzustellen.

Alternativ oder ergänzend kann an dem Tor 300 ein Sensor 402 angeordnet sein, der eingerichtet ist, Sensordaten in Bezug auf die auf das Tor 300 einwirkende Kraft, insbesondere in Bezug auf die durch die Kraft bewirkte Bewegung des Tors 300, zu erfassen. Der Sensor 402 kann z. B. einen Bewegungssensor und/oder einen Dehnungsmessstreifen und/oder einen Drucksensor umfassen.

Die Vorrichtung 430 kann eingerichtet sein, auf Basis der erfassten Sensordaten ein Steuersignal zur Steuerung des Reinigungsroboters 100 und/oder zur Steuerung der Servicestation 200 zu ermitteln. Die Sensordaten können ein oder mehrere Eigenschaften der auf das Tor 300 bewirkten Kraft angeben. Beispielhafte Eigenschaften sind:
- die Stärke bzw. die Amplitude der Kraft; und/oder
- der zeitliche Verlauf der Stärke bzw. der Amplitude der Kraft; und/oder
- die Anzahl von Kraftimpulsen; und/oder
- der zeitliche Abstand zwischen zwei direkt aufeinanderfolgenden Kraftimpulsen.

Alternativ oder ergänzend kann an dem Tor 300 ein Sensor 402 angeordnet sein, der eingerichtet ist, Sensordaten in Bezug auf eine Annäherung an das Tor 300 zu erfassen. Die Sensordaten können ein oder mehrere Eigenschaften einer Annäherung an das Tor 300 angeben. Beispielhafte Eigenschaften sind:
- die Geschwindigkeit der Annäherung; und/oder
- der zeitliche Verlauf der Geschwindigkeit der Annäherung; und/oder
- die Anzahl von Annäherungsimpulsen; und/oder
- der zeitliche Abstand zwischen zwei direkt aufeinanderfolgenden Annäherungsimpulsen.

Auf Basis der Sensordaten kann somit ein Muster der äußeren Kraft und/oder der Annäherung erkannt werden, das von einem Nutzer (durch ein oder mehrere Tritte gegen das Tor 300) bewirkt wurde. Das erkannte Muster kann mit einem bestimmten Steuersignal und/oder mit einer bestimmten Funktion (des Reinigungsroboters 100 und/oder der Servicestation 200) assoziiert sein. Die Vorrichtung 430 kann z. B. eingerichtet sein, eine Zuweisungsfunktion zu nutzen, durch die eine bestimmte Menge von ein oder mehreren unterschiedlichen Mustern einer entsprechenden Menge von ein oder mehreren unterschiedlichen Steuersignalen zugeordnet wird. Die Zuweisungsfunktion kann z. B. eine Look-Up-Tabelle umfassen. Es kann dann anhand der Zuweisungsfunktion in zuverlässiger Weise das Steuersignal für ein erkanntes Muster ermittelt werden.

Durch die ein oder mehreren unterschiedlichen Steuersignale können ein oder mehrere unterschiedliche Funktionen der Servicestation 200 und/oder des Reinigungsroboters 100 ausgelöst werden. Es kann dem Nutzer ermöglicht werden, über eine Benutzerschnittstelle der Servicestation 200 und/oder des Reinigungsroboters 100 den ein oder mehreren unterschiedlichen Steuersignalen jeweils eine Funktion zuzuordnen, die durch das jeweilige Steuersignal (und dem damit assoziierten Muster) ausgelöst werden kann.

Die Vorrichtung 430 kann über eine drahtgebundene und/oder eine drahtlose Datenschnittstelle mit dem Sensor 402 zur Erfassung der Sensordaten verbunden sein. Ferner kann die Vorrichtung 430 über eine drahtgebundene und/oder eine drahtlose Datenschnittstelle mit der Steuereinheit 130 des Reinigungsroboters 100 verbunden sein. Das ermittelte Steuersignal kann über die Datenschnittstelle an den Reinigungsroboter 100 gesendet werden, um den Reinigungsroboter 100 zu veranlassen, die mit dem Steuersignal assoziierte Funktion auszuführen.

Es wird somit ein Verfahren beschrieben, bei dem ein Nutzer durch das Ausüben von Druck bzw. durch einen Tritt gegen das Einfahrtstor 300 einer integrierten Servicestation 200 einen Reinigungsauftrag für einen Reinigungsroboter 100 initiieren kann. Der Reinigungsroboter 100 kann eine Trockenreinigungseinheit (mit Saugmund 107, ggf. einer Bürstenwalze 102, einem Sauggebläse, und ggf. einer Seitenbürste) und/oder eine Nassreinigungseinheit (mit Wassertank, Pumpe, Wischpad 109, ggf. Aktorik für Wischpadbewegung) aufweisen. An dem Gehäuse des Reinigungsroboters 100 können ein oder mehrere Schnittstellen angeordnet sein, die ein Laden des elektrischen Energiespeichers, ein Absaugen des Sammelbehälters und/oder ein Befüllen des Wassertanks an einer Servicestation 200 ermöglichen.

Die Servicestation 200 kann ausgebildet sein, ein oder mehrere Servicefunktionen (z. B. Entleerung des Sammelbehälters des Reinigungsroboters 100 durch Absaugen, Befüllen des Roboterwassertanks mit Wasser, Reinigen der Roboterwischpads 109 mit Wasser) bereitzustellen. Die Servicestation 200 kann über ein oder mehrere Anschlüsse für einen Festwasseranschluss (Frischwasser, Abwasser) verfügen. Der Reinigungsroboter 100 und die Servicestation 200 können ausgebildet sein, direkt oder über ein Kommunikationsnetz miteinander zu kommunizieren. Wie in diesem Dokument beschrieben, kann das Basismodul der Servicestation 200 in dem Sockelbereich 212 einer Küchenzeile integriert sein. Auf diese Weise können der Reinigungsroboter 100 und die Servicestation 200 dauerhaft unauffällig platziert werden, bleiben dabei aber jederzeit einsatzbereit. Der Reinigungsroboter 100 kann Zugang zu der Servicestation 200 über eine Öffnung 214 in der Sockelblende 213 erhalten. Ein Tor 300 an dem Basismodul der Servicestation 200 kann die Öffnung 214 in der Sockelblende 213 je nach Situation verschließen oder öffnen. Das Tor 300 kann anhand eines Aktors 401 geöffnet bzw. geschlossen werden.

Wenn der Nutzer mit dem Fuß gegen das Tor 300 tritt bzw. wenn der Nutzer einen Druck auf das Tor 300 ausübt, so kann dies (anhand eines Sensors 401, 402) erkannt werden. In Reaktion auf die erkannte Krafteinwirkung auf das Tor 300 kann bewirkt werden, dass der Reinigungsroboter 100 eine spezifizierte (im Vorfeld festgelegte) Reinigungsaktion durchführt. Diese Reinigungsaktion kann vorzugsweise durch den Nutzer (über eine Benutzerschnittstelle) festgelegt und/oder individuell konfiguriert werden. So kann z. B. die Reinigung eines Gesamtbereichs in einem Haushalt oder die Reinigung eines Teilbereichs (z. B. der Küche oder einer festgelegten Zone) des Haushalts veranlasst werden. Diese Konfiguration kann z. B. über die Software-App des Reinigungsroboters 100 durch den Nutzer vorgenommen werden. Als Standardzone bei einem nicht konfigurierten Reinigungsbereich kann z. B. der Raum (etwa die Küche) festgelegt werden, in dem die Servicestation 200 angeordnet ist.

Die Erkennung einer Krafteinwirkung (z. B. eines Drucks bzw. eines Tritts) auf und/oder eine Annäherung an das Einfahrtstor 300 können wie folgt erkannt werden:
- Das Einfahrtstor 300 weist mindestens einem Motor bzw. Aktor 401 auf, der ein automatisches Öffnen und Schließen des Tores 300 ermöglicht. Es kann eine Strommessung über Messwiderstände oder über eine integrierte Strommessung durch den Motortreiber bzw. die Motorsteuerung verwendet werden. Wenn aufgrund der Krafteinwirkung gegen das Einfahrtstor 300 eine mechanische Bewegung an den Aktor 401 weitergegeben wird, die eine Abweichung von einem Nennstrom des Aktors 401 erzeugt, kann dieser Vorgang registriert werden, um die Krafteinwirkung auf das Tor 300 zu erkennen.
- Es können ein oder mehrere Dehnungsmessstreifen (kurz DMS) als Sensoren 402 verwendet werden, die an ein oder mehreren unterschiedlichen Stellen entlang des Einfahrtstores 300 platziert sind, vorzugsweise (von außen nicht sichtbar) im Innenraum der Servicestation 200. Die ein oder mehreren DMS registrieren die Krafteinwirkung (insbesondere den Druck) gegen das Tor 300 und geben über eine angeschlossene Steuerung, welche z. B. separat integriert oder an die Elektronik der Servicestation 200 angebunden ist, das Signal zum Starten des spezifischen Reinigungsauftrags des Reinigungsroboters 100 weiter.
- Es können ein oder mehrere kapazitive Sensoren 402 (z. B. im Innenraum der Servicestation 200) verwendet werden. Durch den sich dem Einfahrtstor 300 nähernden Fuß des Nutzers kann eine messbare Kapazitätsänderung bewirkt werden, durch welche die Nutzeraktion erkannt werden kann. In diesem Fall kann eine Erkennung der Annäherung ohne das Ausüben eines Druckes bzw. einer Kraft gegen das Tor 300 seitens des Nutzers erfolgen.
- Es können ein oder mehrere Sensoren 402 verwendet werden, die z. B. einen Druck, ein Verbiegen oder eine Fußbewegung bzw. ein "Eindringen" des Fußes an dem Tor 300 erkennen können. So kann z. B. eine Art "Messvorhang" in Form von ein oder mehreren Lichtschranken und/oder Ultraschallsensoren auf der Außenseite der Servicestation 200 oberhalb des Einfahrtstores 300 angeordnet werden. Dabei kann ein Signal aktiviert werden, sobald der Nutzer den Fuß an das Einfahrtstor 300 heran bewegt. In diesem Fall kann die Erkennung ohne das Ausüben eines bestimmten Druckes bzw. einer Kraft gegen das Tor 300 seitens des Nutzers erfolgen.

Fig. 5 zeigt ein Ablaufdiagramm eines (ggf. Computer-implementierten) Verfahrens 500 zur Steuerung eines Reinigungsroboters 100, der ausgebildet ist, in einer Servicestation 200 angeordnet zu werden. Die Servicestation 200 weist eine Zugangsöffnung 214 auf, die dafür vorgesehen ist, dass der Reinigungsroboter 100 über die Zugangsöffnung 214 zu der Servicestation 200, insbesondere zu der Abstellfläche und/oder zu dem Andockelement 208 der Servicestation 200, hin- oder von der Servicestation 200, insbesondere von der Abstellfläche und/oder von dem Andockelement 208 der Servicestation 200, wegfährt. Die Servicestation 200 kann ein bewegliches Tor 300 aufweisen, das durch einen Aktor 401 geöffnet oder geschlossen werden kann (um die Zugangsöffnung 214 zu öffnen oder zu schließen). Das Verfahren 500 kann durch eine (Steuer-) Vorrichtung 430 der Servicestation 200 ausgeführt werden.

Das Verfahren 500 umfasst das Ermitteln 501, anhand von ein oder mehreren Sensoren 402, von Sensordaten in Bezug auf eine Annäherung eines Körperteils, insbesondere eines Fußes, eines Nutzers an die Zugangsöffnung 214 und/oder in Bezug auf eine Krafteinwirkung auf das an der Zugangsöffnung 214 angeordnete (geschlossene) Tor 300. Beispielhafte Sensoren 402 sind: ein (kapazitiver) Annäherungssensor, eine Lichtschranke, ein Ultraschallsensor, ein Dehnungsmessstreifen, und/oder ein Ultraschallsensor. Ggf. kann der Aktor 401 (etwa eine Strom- und/oder Spannungsmessung des Aktors 401) des Tors 300 dazu verwendet werden, die Sensordaten zu erfassen.

Die Sensordaten können ein bestimmtes Muster der Annäherung und/oder der Krafteinwirkung angeben. Das Muster kann z. B. ein oder mehrere (ggf. pulsartige) Annäherungen und/oder Krafteinwirkungen aufweisen. Es kann auf Basis der Sensordaten erkannt werden, dass ein bestimmtes Muster der Annäherung und/oder der Krafteinwirkung bewirkt wurde.

Das Verfahren 500 umfasst ferner, das Betreiben 502 des Reinigungsroboters 100 in Abhängigkeit von den Sensordaten, insbesondere in Abhängigkeit von dem erkannten Muster der Annäherung und/oder der Krafteinwirkung. Zu diesem Zweck kann von der Servicestation 200 ein Steuersignal an den Reinigungsroboter 100 gesendet werden (z. B. über eine Datenschnittstelle des Andockelements 208 der Servicestation 200). Es kann dann von dem Reinigungsroboter 100 eine bestimmte Funktion, insbesondere ein bestimmter Reinigungsauftrag, ausgeführt werden.

Die in diesem Dokument beschriebenen Maßnahmen ermöglichen eine effiziente, komfortable und zuverlässige Steuerung eines in einer Servicestation 200 angeordneten Reinigungsroboters 100.

Die vorliegende Erfindung ist nicht auf die gezeigten Ausführungsbeispiele beschränkt. Insbesondere ist zu beachten, dass die Beschreibung und die Figuren nur das Prinzip der in diesem Dokument beschriebenen Vorrichtung und/oder des in diesem Dokument beschriebenen Verfahrens veranschaulichen sollen.

### Bezugszeichenliste

- 100: Reinigungsroboter
- 101: Antriebseinheit
- 102: Bürstenwalze
- 104: Führungs- und/oder Stützelement
- 105: Stoßfänger
- 106: Reinigungseinheit / Saugdüse
- 107: Saugmund
- 109: Wischelement
- 110: Umfeldsensor
- 111: Speichereinheit
- 120: Bewegungsrichtung / Längsrichtung
- 121: Oberseite
- 122: Unterseite
- 123: Seitenwand
- 130: Steuereinheit
- 200: Servicestation
- 201: Saugkanal
- 202: Verbindungskanal
- 203: Leitungskanal
- 204: elektrische Versorgungsschnittstelle
- 205: Tankstutzen
- 206: Regenerierungswanne
- 207: Regenerierungselement
- 208: Andockelement
- 209: Zusatzmodul
- 210: (Küchen-) Schrank
- 211: Sockel
- 212: Sockelbereich
- 213: Frontblende
- 214: Öffnung (Frontblende)
- 215: Schranktür
- 300: Tor
- 301: Faltkante
- 302: Drehachse
- 400: System
- 401: Aktor (Tor)
- 402: Sensor
- 430: Steuer-Vorrichtung
- 500: Verfahren zur Steuerung eines Reinigungsroboters
- 501-502: Verfahrensschritte

## Patentansprüche

1. Vorrichtung (430) zur Steuerung eines Reinigungsroboters (100), der ausgebildet ist, in einer Servicestation (200) angeordnet zu werden; wobei die Servicestation (200) eine Zugangsöffnung (214) aufweist, die dafür vorgesehen ist, dass der Reinigungsroboter (100) über die Zugangsöffnung (214) zu der Servicestation (200) hin- oder von der Servicestation (200) wegfährt; wobei die Vorrichtung (430) eingerichtet ist,
- anhand von ein oder mehreren Sensoren (402) Sensordaten in Bezug auf eine Annäherung eines Körperteils eines Nutzers an die Zugangsöffnung (214) und/oder in Bezug auf eine Krafteinwirkung auf ein an der Zugangsöffnung (214) angeordnetes Tor (300) zu ermitteln; und
- den Reinigungsroboter (100) in Abhängigkeit von den Sensordaten zu betreiben.

2. Vorrichtung (430) gemäß Anspruch 1, wobei die Vorrichtung (430) eingerichtet ist,
- auf Basis der Sensordaten ein Steuersignal zur Ansteuerung des Reinigungsroboters (100) zu ermitteln; und
- den Reinigungsroboter (100) anhand des Steuersignals zu veranlassen, eine mit dem Steuersignal assoziierte Funktion auszuführen.

3. Vorrichtung (430) gemäß Anspruch 2, wobei die Vorrichtung (430) eingerichtet ist, das Steuersignal über eine drahtgebundene oder drahtlose Kommunikationsverbindung an den Reinigungsroboter (100) zu senden, um den Reinigungsroboter (100) zu veranlassen, die mit dem Steuersignal assoziierte Funktion auszuführen.

4. Vorrichtung (430) gemäß einem der Ansprüche 2 bis 3, wobei die Vorrichtung (430) eingerichtet ist,
- auf Basis der Sensordaten ein Muster der Annäherung und/oder der Krafteinwirkung zu erkennen; und
- das Steuersignal auf Basis des erkannten Musters zu ermitteln.

5. Vorrichtung (430) gemäß Anspruch 4, wobei die Vorrichtung (430) eingerichtet ist,
- auf Basis der Sensordaten ein bestimmtes Muster der Annäherung und/oder der Krafteinwirkung aus einer Vielzahl von unterschiedlichen Mustern der Annäherung und/oder der Krafteinwirkung zu erkennen; wobei die Vielzahl von unterschiedlichen Mustern über eine vordefinierte Zuordnungsfunktion, insbesondere über eine vordefinierte Tabelle, mit einer entsprechenden Vielzahl von unterschiedlichen Steuersignalen für eine entsprechende Vielzahl von unterschiedlichen Funktionen des Reinigungsroboters (100) assoziiert ist; und
- das Steuersignal für das bestimmte Muster anhand der Zuordnungsfunktion zu ermitteln.

6. Vorrichtung (430) gemäß Anspruch 5, wobei sich die einzelnen Muster der Vielzahl von unterschiedlichen Mustern unterscheiden, in Bezug auf
- eine Anzahl von zeitlich isolierten Annäherungen und/oder Krafteinwirkungen;
- eine Dauer einer zeitlich isolierten Annäherung und/oder Krafteinwirkung; und/oder
- einen zeitlichen Abstand zwischen zwei zeitlich isolierten Annäherungen und/oder Krafteinwirkungen.

7. Vorrichtung (430) gemäß einem der Ansprüche 2 bis 6, wobei die Vorrichtung (430) eingerichtet ist,
- über eine Benutzerschnittstelle eine Nutzereingabe in Bezug auf die Funktion und/oder einen Umfang der Funktion des Reinigungsroboters (100) zu ermitteln, die mit dem Steuersignal und/oder mit einem bestimmten Muster der Annäherung und/oder Krafteinwirkung assoziiert ist; und
- eine Zuordnungsfunktion, insbesondere eine Tabelle, zur Zuordnung des Steuersignals und/oder des bestimmten Musters der Annäherung und/oder der Krafteinwirkung mit einer Funktion des Reinigungsroboters (100) in Abhängigkeit von der Nutzereingabe anzupassen.

8. Vorrichtung (430) gemäß einem der Ansprüche 2 bis 7, wobei
- die Funktion des Reinigungsroboters (100) einen von dem Reinigungsroboter (100) auszuführenden Reinigungsauftrag umfasst; und
- der Reinigungsauftrag insbesondere angibt,
- einen räumlichen Bereich, der durch den Reinigungsroboter (100) zu reinigen ist;
- einen Typ der Reinigung, insbesondere eine Trockenreinigung und/oder eine Nassreinigung, die durch den Reinigungsroboter (100) durchzuführen ist; und/oder
- eine Intensität, insbesondere eine Gebläseleistungsstufe und/oder eine Rotationsund/oder Vibrationsgeschwindigkeit eines Wischelements (109) und/oder eine Flüssigkeitsmenge, mit der die Reinigung durch den Reinigungsroboter (100) durchzuführen ist.

9. Vorrichtung (430) gemäß einem der vorhergehenden Ansprüche, wobei
- die ein oder mehreren Sensoren (402) zumindest einen Sensor umfassen, der eingerichtet ist, Sensordaten in Bezug auf eine Krafteinwirkung auf das Tor (300) der Servicestation (200) zu erfassen; und
- wobei die ein oder mehreren Sensoren (402) umfassen,
- zumindest einen an dem Tor (300) angeordneten Dehnungsmessstreifen; und/oder
- zumindest einen an dem Tor (300) angeordneten Beschleunigungs- und/oder Kraftsensor; und/oder
- zumindest einen Schalter.

10. Vorrichtung (430) gemäß einem der vorhergehenden Ansprüche, wobei
- das Tor (300) einen elektrisch betriebenen Aktor (401) umfasst, der eingerichtet ist, das Tor (300) zu öffnen oder zu schließen; und
- die ein oder mehreren Sensoren (402) zumindest einen Sensor umfassen, der eingerichtet ist, einen Strom und/oder eine Spannung zu erfassen, die durch die Krafteinwirkung auf das Tor (300) in dem Aktor (401) induziert wurden.

11. Vorrichtung (430) gemäß einem der vorhergehenden Ansprüche, wobei
- die ein oder mehreren Sensoren (402) zumindest einen Sensor umfassen, der eingerichtet ist, Sensordaten in Bezug auf eine Annäherung an die Zugangsöffnung (114) der Servicestation (200) zu erfassen; und
- wobei die ein oder mehreren Sensoren (402) umfassen
- einen kapazitiven Sensor, der insbesondere an dem Tor (300) der Servicestation (200) angeordnet ist; und/oder
- eine an der Zugangsöffnung (114) angeordnete Lichtschranke; und/oder
- ein an der Zugangsöffnung (114) angeordneter Ultraschallsensor.

12. Vorrichtung (430) gemäß einem der vorhergehenden Ansprüche, wobei
- die Servicestation (200) ein Andockelement (208) zum Andocken des Reinigungsroboters (100) umfasst; und
- die Vorrichtung (430) eingerichtet ist,
- zu bestimmen, ob der Reinigungsroboter (100) an dem Andockelement (208) angedockt ist oder nicht; und
- den Reinigungsroboter (100) in Abhängigkeit von den Sensordaten zu betreiben, insbesondere nur dann, wenn bestimmt wird, dass der Reinigungsroboter (100) an dem Andockelement (208) angedockt ist.

13. Servicestation (200) für einen Reinigungsroboter (100), wobei die Servicestation (200) umfasst,
- eine Abstellfläche für den Reinigungsroboter (100);
- eine Zugangsöffnung (214), die dafür vorgesehen ist, dass der Reinigungsroboter (100) über die Zugangsöffnung (214) zu der Abstellfläche hin- oder von der Abstellfläche wegfährt; und
- eine Vorrichtung (430) zur Steuerung des Reinigungsroboters (100), die gemäß einem der vorhergehenden Ansprüche ausgebildet ist.

14. Servicestation (200) gemäß Anspruch 13, wobei die Servicestation (200) ausgebildet ist, in einem Sockelbereich (212) zwischen zwei Sockeln (211) eines Schranks (210) angeordnet zu werden, sodass
- die Zugangsöffnung (214) zwischen den zwei Sockeln (211) des Schranks (210) angeordnet ist und/oder durch die zwei Sockel (211) des Schranks (210) begrenzt wird; und/oder
- die Zugangsöffnung (214) einer Öffnung in einer Sockelleiste (213) des Schranks (210) entspricht, die insbesondere durch das Tor (300) der Servicestation (200) verschlossen oder geöffnet werden kann.

15. Verfahren (500) zur Steuerung eines Reinigungsroboters (100), der ausgebildet ist, in einer Servicestation (200) angeordnet zu werden; wobei die Servicestation (200) eine Zugangsöffnung (214) aufweist, die dafür vorgesehen ist, dass der Reinigungsroboter (100) über die Zugangsöffnung (214) zu der Servicestation (200) hin- oder von der Servicestation (200) wegfährt; wobei das Verfahren (500) umfasst,
- Ermitteln (501), anhand von ein oder mehreren Sensoren (402), von Sensordaten in Bezug auf eine Annäherung eines Körperteils eines Nutzers an die Zugangsöffnung (214) und/oder in Bezug auf eine Krafteinwirkung auf ein an der Zugangsöffnung (214) angeordnetes Tor (300); und
- Betreiben (502) des Reinigungsroboters (100) in Abhängigkeit von den Sensordaten.
